# FASCICULE DE BREVET EUROPEEN

(11) **EP 3 261 877 B1**
(45) Date de publication et mention de la délivrance du brevet: **05.06.2019**
(21) Numéro de dépôt: 16714975.6
(22) Date de dépôt: 23.02.2016
(51) Int. Cl.: B29L 31/30, B32B 5/02, B60N 3/04, B32B 7/14, B29K 75/00, B32B 27/12, B29C 44/12, B32B 37/00, B29C 44/34, B32B 27/30, B32B 37/18, B29C 44/42, B32B 38/00, B32B 3/06, B32B 3/30, B62D 65/14

(54) **ENSEMBLE DE TAPIS D'HABITACLE ET PROCEDE D'ASSEMBLAGE D'UN TEL ENSEMBLE**
FAHRGASTRAUMTEPPICHANORDNUNG UND VERFAHREN ZUR MONTAGE SOLCH EINER ANORDNUNG
PASSENGER COMPARTMENT CARPET ASSEMBLY, AND METHOD FOR ASSEMBLING SUCH AN ASSEMBLY

(30) Priorité: 27.02.2015 FR 1551684
(43) Date de publication de la demande: 03.01.2018
(73) Titulaire: PSA AUTOMOBILES S.A., 78300 Poissy (FR); Autoneum Management AG, 8406 Winterthur (CH)
(72) Inventeur: CHANUDET, Patrick, 92400 Courbevoie (FR); BERLIOZ, Emeline, 92370 Chaville (FR); STRASSER, Patricia, 92160 Antony (FR); KOSSANYI, Mathias, 75010 Paris (FR)
(86) Numéro de dépôt international: PCT/FR2016/050416
(87) Numéro de publication internationale: WO 2016/135414

(56) Documents cités:
- DE-A1-102011 009 589
- FR-A1- 2 899 171
- US-A- 5 007 670

## Description

La présente invention concerne un ensemble de tapis d'habitacle et un procédé d'assemblage d'un tel ensemble. La présente invention vise en particulier un ensemble de tapis d'habitacle de véhicule automobile. Plus précisément, l'invention concerne la réalisation d'une cale, en vue de réaliser un assemblage d'un tapis d'habitacle sur ladite cale, par l'intermédiaire d'un matériau expansible, de type mousse polyuréthane, injecté dans le volume existant entre ladite cale et ledit tapis, tout en minimisant la quantité de mousse nécessaire et en facilitant l'injection de ladite mousse entre ladite cale et ledit tapis.

Ainsi, la présente invention est relative à des ensembles de tapis d'habitacle, comprenant une cale en polystyrène expansé ou une cale formant une structure intégrée en plastique. Dans ce contexte, la présente invention propose de nouveaux moyens intégrés à ladite cale, notamment en vue d'optimiser le maintien du tapis sur la cale par injection de mousse et de minimiser la quantité de mousse nécessaire.

Selon l'état de la technique, les ensembles de tapis d'habitacle comprennent un tapis reposant sur une cale, lesdits tapis et cale étant maintenus en un ensemble mécaniquement solidaire par de la mousse polyuréthane injectée dans le volume existant autour de la cale, entre la cale et le fond de l'habitacle et entre la cale et le tapis d'habitacle. La cale est intégralement noyée dans la mousse polyuréthane. En particulier, sur la face supérieure de la cale, le moussage est réalisé, selon l'état de l'art, sur la totalité de l'interface avec le tapis d'habitacle dans le but d'assurer la tenue du tapis.

Ainsi, la mousse polyuréthane sert en quelque sorte de colle pour assembler le tapis sur la cale.

Une problématique connue de l'homme du métier réside dans le maintien du tapis sur la cale en vue de former un ensemble mécanique solidaire, sans jeu, et sans nécessiter l'injection de grandes quantités de mousse. A cette fin, selon l'état de la technique, le tapis peut être maintenu sur la cale par l'intermédiaire de puits verticaux aménagés dans le tapis, creusés à partir d'une face inférieure du tapis, de façon à permettre à la mousse polyuréthane, lors de son expansion, de remonter dans le tapis, formant ainsi des tiges de maintien pénétrant le tapis.

Le document FR2899171 décrit un dispositif représentatif de l'état de l'art, sous la forme d'une structure portante supportant un tapis, ledit tapis comportant des logements permettant à de la mousse de venir en contact localement avec le tapis, afin d'assurer son maintien.

Cependant, les systèmes connus et leurs procédés de fabrication présentent l'inconvénient, pour la plupart, de nécessiter une quantité de mousse importante, du fait que la mousse polyuréthane recouvre nécessairement l'intégralité de la surface comprise entre la cale et le tapis.

Un autre inconvénient de ces dispositifs connus réside dans le fait que l'enfoncement du tapis sous charge est important, du fait que le moussage présente une épaisseur nécessaire d'au minimum 5 à 10 mm afin de permettre son expansion lors de la fabrication, notamment pour favoriser la remontée de la mousse dans les puits.

Cette épaisseur importante de mousse située entre le tapis et la cale dégrade la performance d'enfoncement sous charge. En effet la mousse polyuréthane présente une faible résistance à la compression sous charge. De plus, la grande quantité de mousse nécessaire dans ces dispositifs connus engendre un coût élevé.

Or, dans le contexte d'un habitacle de véhicule automobile, on cherche à éviter un enfoncement trop important du tapis d'habitacle sous charge. De ce fait, en raison de l'importante épaisseur de la mousse polyuréthane injectée entre la cale et le tapis dans les ensembles de tapis d'habitacle connus, la structure des cales, en polystyrène expansé ou en plastique, est configurée pour être très raide. Ce renforcement de la structure des cales induit un surcoût et une augmentation de la masse des ensembles de tapis d'habitacle connus.

Par ailleurs, en ce qui concerne les dispositifs comprenant des puits verticaux, il existe une difficulté pour la mousse de remonter dans ces cavités puisque ces dernières sont non débouchantes. La rigidité de ces ensembles n'est par conséquent pas satisfaisante.

Il existe donc un besoin pour un ensemble de tapis d'habitacle comprenant une cale et un tapis maintenu par de la mousse injectée, et comprenant des moyens de maintien configurés pour autoriser une quantité réduite de mousse tout en assurant une bonne rigidité à l'ensemble.

Dans ce contexte, l'invention concerne une réalisation originale de cale pour ensemble de tapis d'habitacle, permettant de réaliser l'assemblage de ladite cale avec ledit tapis, par l'intermédiaire d'un matériau expansible de type mousse polyuréthane, tout en minimisant la quantité de mousse employée et en facilitant l'injection de ladite mousse.

Pour atteindre cet objectif, la cale de l'ensemble de tapis d'habitacle selon l'invention comprend une pluralité de canaux aménagés sur la face de la cale placée en contact avec le tapis. Lors de l'expansion de la mousse, durant le processus de fabrication de l'ensemble, ladite mousse progresse dans les conduits formés par lesdits canaux, entre la face supérieure de la cale et la face inférieure du tapis.

A cet effet, plus précisément, l'invention a pour objet un ensemble de tapis d'habitacle de véhicule conforme au préambule de la revendication 1 qui reprend l'enseignement du document DE102011009589.

L'ensemble de tapis d'habitacle selon l'invention est remarquable par la partie caractérisante de la revendication 1.

Avantageusement, la face supérieure de la cale comporte une deuxième pluralité de canaux parallèles entre eux, formant un angle non nul avec les canaux de la première pluralité de canaux, lesdits canaux de la première pluralité de canaux étant parallèles entre eux.

Selon un mode de réalisation, le matériau expansible est une mousse polyuréthane.

Selon un mode de réalisation, la cale est en polystyrène expansé.

Selon un autre mode de réalisation, ladite cale peut être en plastique.

Selon ce mode de réalisation, ladite cale peut former une structure de support intégré pour le tapis d'habitacle.

La présente invention vise également une cale selon la revendication 7.

Selon un mode de réalisation, lesdits canaux sont sensiblement parallèles entre eux.

L'invention concerne également un procédé d'assemblage d'un ensemble de tapis d'habitacle tel que brièvement décrit ci-dessus, ledit procédé d'assemblage comportant :
- une étape de rainurage de la surface supérieure de la cale, ladite surface supérieure étant destinée à se trouver en vis-à-vis de la surface inférieure du tapis d'habitacle, pour former les canaux sur ladite surface supérieure ;
- une étape de mise en position du tapis d'habitacle sur la surface supérieure rainurée de ladite cale ; et
- une étape de d'injection de matériau expansible à l'intérieur desdits canaux, de sorte que ledit matériau expansible, se propageant dans lesdits canaux, forme, en séchant, des bandes de matériau expansible séché aptes à assurer le maintien en position dudit tapis d'habitacle sur ladite cale.

Selon un mode de réalisation du procédé d'assemblage, le matériau expansible injecté est une mousse polyuréthane.

La présente invention et ses différents modes de réalisation présentent les avantages de minimiser l'engagement de mousse, de réduire l'enfoncement sous charge de l'ensemble et de faciliter la propagation de la mousse entre la cale et le tapis d'habitacle lors du processus de fabrication dudit ensemble.

D'autres caractéristiques et avantages de l'invention apparaîtront à la lecture de la description détaillée des modes de réalisation de l'invention, donnés à titre d'exemple uniquement et en référence aux dessins qui montrent :
- figure 1, le schéma d'un ensemble de tapis d'habitacle comprenant une cale, conformément à la présente invention,
- figure 2, le schéma d'une cale dont une face supérieure comprend des canaux, conformément à la présente invention,
- figure 3, le schéma d'une section transverse d'un exemple d'ensemble de tapis d'habitacle, selon l'invention,
- figure 4, le schéma d'une section transverse d'un exemple de cale pour ensemble de tapis d'habitacle, selon l'invention.

Dans ce qui va suivre, les modes de réalisation décrits s'attachent plus particulièrement à une mise en oeuvre de l'invention dans un habitacle de véhicule automobile. Cependant, toute mise en oeuvre de la présente invention dans un contexte différent, c'est-à-dire dans tout type de véhicule, est également visée par la présente invention.

Il est à noter, par ailleurs, que la présente invention vise un ensemble de tapis d'habitable, c'est-à-dire un ensemble composé d'un tapis d'habitacle et d'un support, également appelé « cale », ainsi que d'un matériau expansible injecté dans le volume existant entre la cale et le tapis d'habitacle. Il est précisé, en outre, que l'expression « tapis d'habitacle » est à interpréter de façon large et concerne aussi bien un faux-plancher, un cale-pied, un élément de garnissage ou un revêtement de sol habillant un habitacle de véhicule.

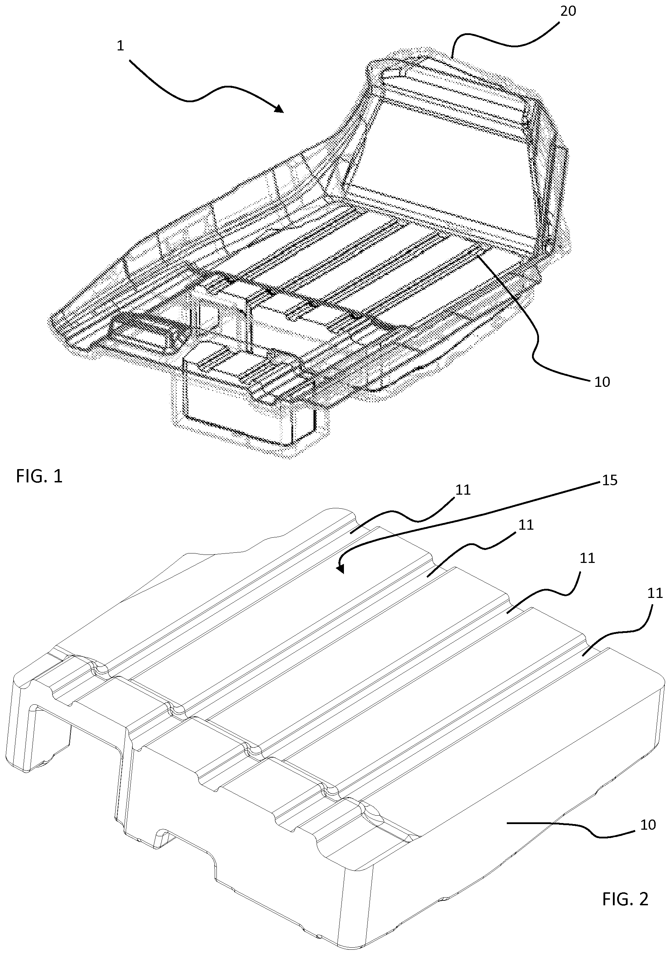

Ainsi, la figure 1 représente un ensemble de tapis d'habitacle de véhicule 1. Cet ensemble de tapis d'habitacle comprend un tapis d'habitacle 20 et une cale 10.

En référence à la figure 2, selon l'invention, la cale 10 comprend une pluralité de canaux 11, de préférence parallèles entre eux, creusés sur une face supérieure 15 de la cale, ladite face supérieure 15 de la cale 10 étant destinée à se trouver en vis-à-vis d'une face inférieure 25 du tapis 20.

Plus précisément, le tapis 20 de l'ensemble de tapis 1 repose en appui, via sa face inférieure 25, sur la face supérieure 15 de la cale 10.

Dans le procédé selon l'invention, les canaux 11 sont réalisés par rainurage sur la face supérieure de la cale 10. Ces canaux 11 forment ainsi des conduits entre la face supérieure 15 de la cale 10 et la face inférieure 25 du tapis 20 lorsque ledit tapis d'habitacle 20 est positionné sur ladite cale 10, de telle façon que le tapis 20 repose sur la cale 10, la face inférieure 25 du tapis étant en contact avec la face supérieure 15 de la cale 10.

Dans une étape de procédé d'assemblage selon l'invention, consistant à injecter un matériau expansible, tel que de la mousse 30 de type polyuréthane, dans le volume existant autour de la cale 10 et en particulier entre ladite cale 10 et le tapis 20, la cale et le tapis sont placés dans un moule de moussage, l'envers du tapis d'habitacle 20, c'est-à-dire sa face inférieure 25, étant en contact avec la face supérieure 15 de la cale 10.

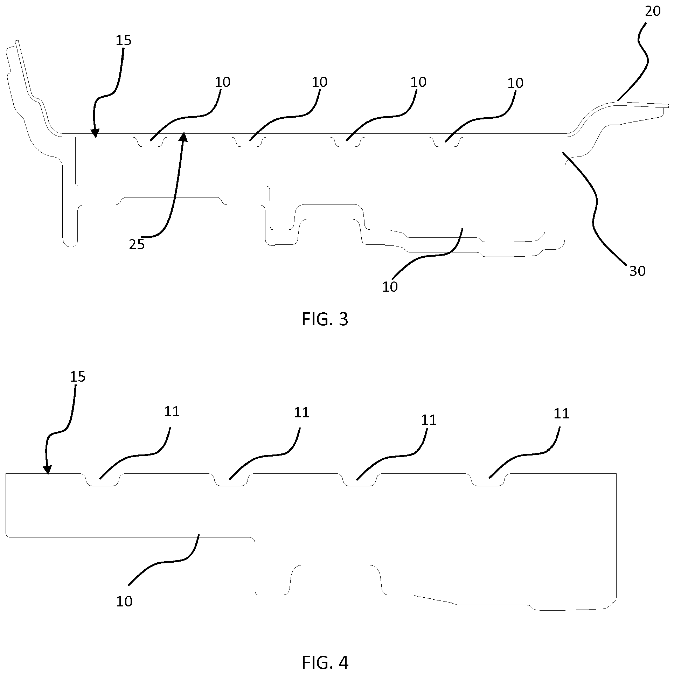

En référence à la figure 3, la propagation de la mousse 30 s'effectue entre la cale 10 et le tapis 20. En particulier, la mousse injectée se propage dans les conduits formés à partir des canaux 11, entre la face supérieure 15 de la cale 10 et la face inférieure 25 du tapis 20.

Les canaux 11 facilitent la propagation de la mousse 30, classiquement du polyuréthane, tout en minimisant le volume de mousse 30 injectée.

Le procédé d'assemblage de la cale 10 avec le tapis d'habitacle 20 est ainsi réalisé par l'intermédiaire de l'expansion de la mousse 30 à l'intérieur des canaux 11.

Au terme de l'opération d'injection de la mousse et de l'expansion de cette dernière, le tapis d'habitacle 20 se trouve maintenu sur la cale 10 par l'intermédiaire de bandes de mousse correspondant aux conduits formés à partir des canaux 11.

Il est à noter que le même principe, selon lequel des canaux aménagés dans la cale permettent le maintien du tapis d'habitacle, est applicable au contexte d'une cale supportant un tapis d'habitacle au niveau d'un repose-pied.

En résumé, la présente invention concerne un ensemble de tapis d'habitacle comprenant en particulier une cale 10 telle que représentée à la figure 4. La cale 10 présente, sur sa face supérieure 15, au contact avec la face inférieure 25 du tapis 20, des canaux 11 adaptés pour que s'y propage un matériau expansible injecté, tel que de la mousse polyuréthane, de façon à former des bandes de mousse aptes à maintenir en place ledit tapis 20.

Il est précisé, en outre, que la présente invention n'est pas limitée aux exemples décrits ci-dessus et est susceptible de nombreuses variantes accessibles à l'homme de l'art.

En particulier, comme évoqué précédemment, le procédé d'assemblage s'applique notamment à un faux-plancher, placé sur une cale de support intégrée, recouvrant une partie de la caisse du véhicule ou à un élément de garnissage, reposant sur une cale de support intégrée, à l'intérieur d'un habitacle de véhicule.

## Revendications

1. Ensemble de tapis d'habitacle de véhicule comprenant une cale (10), un tapis d'habitacle (20), et du matériau expansible injecté (30) dans un volume présent notamment entre ladite cale (10) et ledit tapis d'habitacle (20), le tapis d'habitacle présentant une face inférieure (25) en vis-à-vis d'une face supérieure (15) de ladite cale (10), l'ensemble de tapis d'habitacle étant **caractérisé en ce que** la face supérieure (15) de la cale (10), au contact de la face inférieure (25) du tapis d'habitacle (20), comporte une première pluralité de canaux (11), configurés de telle sorte que lesdits canaux (11), injectés de matériau expansible (30), induisent la formation de bandes de matériau expansible séché assurant le maintien du tapis d'habitacle (20) sur la cale (10).

2. Ensemble de tapis d'habitacle de véhicule selon la revendication 1, **caractérisé en ce que** la face supérieure (15) de la cale (10) comporte une deuxième pluralité de canaux parallèles entre eux, formant un angle non nul avec les canaux (11) de la première pluralité de canaux, lesdits canaux (11) de la première pluralité de canaux étant parallèles entre eux.

3. Ensemble de tapis d'habitacle de véhicule selon l'une quelconque des revendications 1 à 2, **caractérisé en ce que** le matériau expansible (30) est une mousse polyuréthane.

4. Ensemble de tapis d'habitacle de véhicule selon l'une quelconque des revendications 1 à 3, **caractérisé en ce que** la cale (10) est en polystyrène expansé.

5. Ensemble de tapis d'habitacle de véhicule selon l'une quelconque des revendications 1 à 3, **caractérisé en ce que** la cale (10) est en plastique.

6. Ensemble de tapis d'habitacle de véhicule selon la revendication 5, **caractérisé en ce que** ladite cale (10) forme une structure de support intégré pour le tapis d'habitacle (20).

7. Cale pour ensemble de tapis d'habitacle selon l'une quelconque des revendications 1 à 6 comportant sur sa surface supérieure (15), destinée à se trouver en vis-à-vis de la surface inférieure (25) du tapis d'habitacle (20), une pluralité de canaux (11), **caractérisée en ce que** l'intérieur desdits canaux (11) est injecté de matériau expansible (30) permettant la formation de bandes de matériau expansible séché, par expansion du matériau expansible.

8. Cale selon la revendication 7, **caractérisé en ce que** lesdits canaux (11) sont sensiblement parallèles entre eux.

9. Procédé d'assemblage d'un ensemble de tapis d'habitacle selon l'une quelconque des revendications 1 à 6, **caractérisé en ce qu'**il comporte :
- une étape de rainurage de la surface supérieure (15) de la cale (10), ladite surface supérieure (15) étant destinée à se trouver en vis-à-vis de la surface inférieure du tapis d'habitacle (20), pour former des canaux (11) sur ladite surface supérieure (15) ;
- une étape de mise en position du tapis d'habitacle (20) sur la surface supérieure (15) rainurée de ladite cale (10) ; et
- une étape de d'injection de matériau expansible à l'intérieur desdits canaux (11), de sorte que ledit matériau expansible, se propageant dans lesdits canaux (11), forme, en séchant, des bandes de matériau expansible séché aptes à assurer le maintien en position dudit tapis d'habitacle (20) sur ladite cale (10).

10. Procédé d'assemblage selon la revendication 9, **caractérisé en ce que** le matériau expansible injecté est une mousse polyuréthane (30).

## Patentansprüche

1. Fahrgastraumteppichanordnung eines Fahrzeugs, die eine Unterlage (10) umfasst, einen Fahrgastraumteppich (20) und dehnbares Material (30), das in ein Volumen eingespritzt ist, das sich insbesondere zwischen der Unterlage (10) und dem Fahrgastraumteppich (20) befindet, wobei der Fahrgastraumteppich eine untere Fläche (25) gegenüber einer oberen Fläche (15) der Unterlage (10) aufweist, Fahrgastraumteppichanordnung **dadurch gekennzeichnet, dass** die obere Fläche (15) der Unterlage (10) in Berührung mit der unteren Fläche (25) des Fahrgastraumteppichs (20) eine erste Mehrzahl von Kanälen (11) umfasst, die derart ausgestaltet sind, dass die Kanäle (11), in die dehnbares Material (30) eingespritzt ist, das Bilden getrockneter dehnbarer Materialbänder induzieren, die das Halten des Fahrgastraumteppichs (20) auf der Unterlage (10) sicherstellen.

2. Fahrgastraumteppichanordnung eines Fahrzeugs nach Anspruch 1, **dadurch gekennzeichnet, dass** die obere Fläche (15) der Unterlage (10) eine zweite Mehrzahl von zueinander parallelen Kanälen umfasst, die einen Winkel nicht gleich null mit den Kanälen (11) der ersten Mehrzahl von Kanälen bilden, wobei die Kanäle (11) der ersten Mehrzahl von Kanälen zueinander parallel sind.

3. Fahrgastraumteppichanordnung eines Fahrzeugs nach einem der Ansprüche 1 bis 2, **dadurch gekennzeichnet, dass** das dehnbare Material (30) ein Polyurethanschaum ist.

4. Fahrgastraumteppichanordnung eines Fahrzeugs nach einem der Ansprüche 1 bis 3, **dadurch gekennzeichnet, dass** die Unterlage (10) aus Polystyrolschaum besteht.

5. Fahrgastraumteppichanordnung eines Fahrzeugs nach einem der Ansprüche 1 bis 3, **dadurch gekennzeichnet, dass** die Unterlage (10) aus Kunststoff besteht.

6. Fahrgastraumteppichanordnung eines Fahrzeugs nach Anspruch 5, **dadurch gekennzeichnet, dass** die Unterlage (10) eine integrierte Tragstruktur für den Fahrgastraumteppich (20) bildet.

7. Unterlage für Fahrgastraumteppichanordnung nach einem der Ansprüche 1 bis 6, die auf ihrer oberen Oberfläche (15), die dazu bestimmt ist, der unteren Oberfläche (25) des Fahrgastraumteppichs (20) gegenüberzuliegen, eine Mehrzahl von Kanälen (11) umfasst, **dadurch gekennzeichnet, dass** in das Innere der Kanäle (11) dehnbares Material (30) gespritzt ist, das das Bilden von getrocknetem dehnbarem Material durch Aufdehnen des aufdehnbaren Materials erlaubt.

8. Unterlage nach Anspruch 7, **dadurch gekennzeichnet, dass** die Kanäle (11) im Wesentlichen zueinander parallel sind.

9. Zusammenfügeverfahren einer Fahrgastraumteppichanordnung nach einem der Ansprüche 1 bis 6, **dadurch gekennzeichnet, dass** es Folgendes umfasst:
- einen Rillenbildungsschritt der oberen Oberfläche (15) der Unterlage (10), wobei die obere Oberfläche (15) dazu bestimmt ist, der unteren Oberfläche des Fahrgastraumteppichs (20) gegenüberzuliegen, um Kanäle (11) auf der oberen Oberfläche (15) zu bilden;
- einen Positionierungsschritt des Fahrgastraumteppichs (20) auf der oberen gerillten Oberfläche (15) der Unterlage (10); und
- einen Einspritzschritt dehnbaren Materials in das Innere der Kanäle (11) derart, dass sich das dehnbare Material, indem es sich in den Kanälen (11) ausbreitet, beim Trocken getrocknete dehnbare Materialbilder bildet, die geeignet sind, das Halten in Position des Fahrgastraumteppichs (20) auf der Unterlage (10) sicherzustellen.

10. Zusammenfügeverfahren nach Anspruch 9, **dadurch gekennzeichnet, dass** das eingespritzte dehnbare Material ein Polyurethanschaum (30) ist.

## Claims

1. A vehicle passenger compartment carpet assembly including a spacer (10), a passenger compartment carpet (20), and expandable material (30) injected into a space present particularly between said spacer (10) and said passenger compartment carpet (20), the passenger compartment carpet having a lower face (25) facing an upper face (15) of said spacer (10), the passenger compartment carpet assembly being **characterized in that** the upper face (15) of the spacer (10), in contact with the lower face (25) of the passenger compartment carpet (20), comprises a first plurality of channels (11), configured such that said channels (11), injected with expandable material (30), induce the formation of dried expandable material strips ensuring that the passenger compartment carpet (20) is kept on the spacer (10).

2. The vehicle passenger compartment carpet assembly according to Claim 1, **characterized in that** the upper face (15) of the spacer (10) comprises a second plurality of channels, parallel to one another, forming a non-zero angle with the channels (11) of the first plurality of channels, said channels (11) of the first plurality of channels being parallel to one another.

3. The vehicle passenger compartment carpet assembly according to any one of Claims 1 to 2, **characterized in that** the expandable material (30) is a polyurethane foam.

4. The vehicle passenger compartment carpet assembly according to any one of Claims 1 to 3, **characterized in that** the spacer (10) is made of expanded polystyrene.

5. The vehicle passenger compartment carpet assembly according to any one of Claims 1 to 3, **characterized in that** the spacer (10) is made of plastic.

6. The vehicle passenger compartment carpet assembly according to Claim 5, **characterized in that** said spacer (10) forms an integrated support structure for the passenger compartment carpet (20).

7. A spacer for a passenger compartment carpet assembly according to any one of Claims 1 to 6, comprising, on its upper surface (15), intended to be situated facing the lower surface (25) of the passenger compartment carpet (20), a plurality of channels (11), **characterized in that** the interior of said channels (11) is injected with expandable material (30) permitting the formation of dried expandable material strips, by expansion of the expandable material.

8. The spacer according to Claim 7, **characterized in that** said channels (11) are substantially parallel to one another.

9. A method for assembling a passenger compartment carpet assembly according to any one of Claims 1 to 6, **characterized in that** it comprises:
- a step of grooving of the upper surface (15) of the spacer (10), said upper surface (15) being intended to be situated facing the lower surface of the passenger compartment carpet (20), to form channels (11) on said upper surface (15);
- a step of placing in position the passenger compartment carpet (20) on the upper grooved surface (15) of said spacer (10); and
- a step of injecting expandable material into the interior of said channels (11), such that said expandable material, spreading in said channels (11), forms, when drying, dried expandable material strips suitable to ensure that said passenger compartment carpet (20) is kept in position on said spacer (10).

10. The assembling method according to Claim 9, **characterized in that** the injected expandable material is a polyurethane foam (30).
